# EUROPÄISCHE PATENTSCHRIFT

(11) **EP 2 508 914 B1**
(45) Veröffentlichungstag und Bekanntmachung des Hinweises auf die Patenterteilung: **04.12.2013**
(21) Anmeldenummer: 11002849.5
(22) Anmeldetag: 05.04.2011
(51) Int. Cl.: G01S 7/42, G01S 7/497

(54) **Optische Erfassungsvorrichtung**
Optical detection device
Dispositif de détection optique

(43) Veröffentlichungstag der Anmeldung: 10.10.2012
(73) Patentinhaber: Sick AG, 79183 Waldkirch (DE)
(72) Erfinder: Mack, Stefan, Dr., 79104 Freiburg (DE)
(74) Vertreter: Manitz, Finsterwald & Partner GbR

(56) Entgegenhaltungen:
- EP-A1- 2 237 063
- EP-A2- 1 939 650
- DE-A1- 19 652 440
- DE-C1- 10 025 511

## Beschreibung

Die vorliegende Erfindung betrifft eine optische Erfassungsvorrichtung mit einer Überwachungseinrichtung zur Überwachung eines Verschmutzungsgrads einer Frontscheibe der Erfassungsvorrichtung.

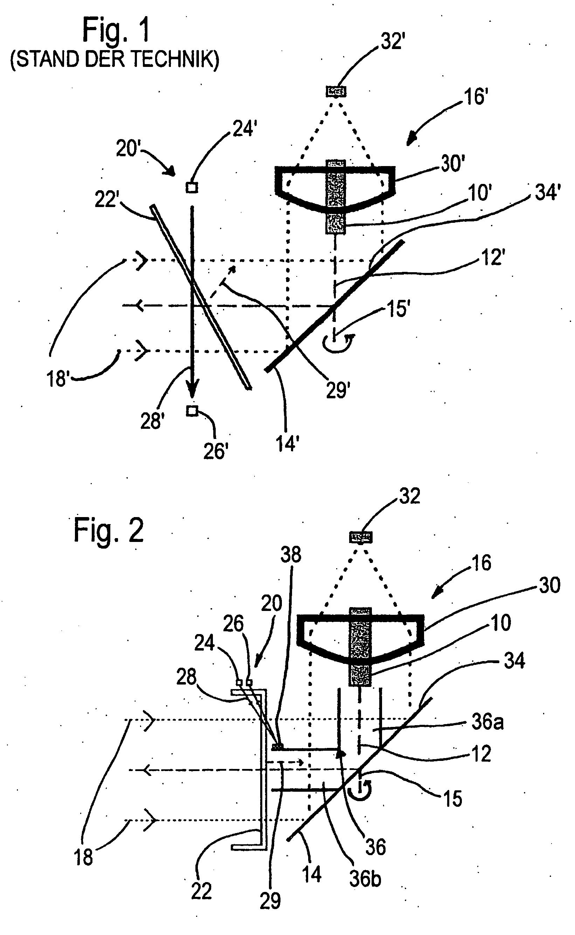

Eine solche optische Erfassungsvorrichtung ist in Fig. 1 schematisch und in Querschnittsdarstellung gezeigt und umfasst eine Sendeeinheit 10' zur Aussendung von Sendestrahlung 12' in einen Erfassungsbereich, eine für die Sendestrahlung 12' durchlässige Frontscheibe 22', eine um eine Drehachse 15' rotierbare Ablenkeinheit 14' um Sendestrahlung 12' in verschiedenen Richtungen in den Erfassungsbereich zu lenken, und eine Empfangseinheit 16' zum Empfangen von aus dem Erfassungsbereich zurückgeworfener Sendestrahlung 18'.

Ferner ist eine Überwachungseinrichtung 20' vorgesehen, die einen Verschmutzungsgrad der Frontscheibe 22' überwacht und wenigstens einen Sender 24' und wenigstens einen Empfänger 26' für Überwachungslichtstrahlung 28' umfasst. Der Sender 24' sendet Überwachungslichtstrahlung 28' aus, die die Frontscheibe 22' durchstrahlt und von dem Empfänger 26' detektiert wird, wobei anhand der empfangenen Lichtintensität der Verschmutzungsgrad der Frontscheibe abgeschätzt werden kann. Damit die Frontscheibe 22' von der Überwachungslichtstrahlung 28' des Senders 24' durchstrahlt wird, ist die Frontscheibe 22' gegenüber der Richtung dieser Überwachungslichtstrahlung 28' wie in Fig. 1 gezeigt schräg gestellt. Für den in Fig. 1 gezeigten 360°-Laserscanner ergibt sich daraus konkret eine Frontscheibe 22' in Form eines um die Mittelachse 15' verlaufenden Kegelstumpfmantels, wobei in der Querschnittsdarstellung in Fig. 1 der Einfachheit halber nur der linke Querschnitt der Frontscheibe 22' dargestellt ist und der dazu bezüglich der Drehachse 15' spiegelsymmetrische Querschnitt der Frontscheibe 22' weggelassen wurde.

Durch die kegelstumpfförmige Frontscheibe 22' entsteht ein zusätzlicher Platzbedarf für die optische Erfassungsvorrichtung, welcher einer weiter gehende Miniaturisierung der optischen Erfassungsvorrichtung entgegensteht.

Bei der in Fig. 1 gezeigten optischen Erfassungsvorrichtung wird von der Sendeeinheit 10' ausgesendete Sendestrahlung 12', die in unerwünschter Weise von der Frontscheibe 22' reflektiert wird (in Fig. 1 durch einen Pfeil 29' gekennzeichnet), aufgrund der Schrägstellung der Frontscheibe 22' in Richtung der Empfangseinheit 16' abgelenkt und kann dadurch die Empfangssignale beeinflussen. Ferner ist es schwierig, die Empfangseinheit 16' durch eine gegebenenfalls vorhandene Kanaltrennungseinrichtung wirksam von von der Frontscheibe 22' ausgehenden Reflexionen abzuschirmen, da stets die Gefahr besteht, dass von der Frontscheibe 22' ausgehende Reflexionen durch einen Spalt zwischen der Kanaltrennungseinrichtung und der Frontscheibe 22' hindurch treten und auf die Empfangseinheit 16' treffen. Eine wirksame Kanaltrennung und insbesondere eine wirksame Unterdrückung des Einflusses von unerwünschten Frontscheibenreflexionen auf die Empfangssignale an der Empfangseinheit 16' sind dadurch erschwert.

DE 197 35 038 A1 offenbart eine optische Erfassungsvorrichtung mit einem Blickwinkel von 180°, die eine Überwachungseinrichtung mit Sendern und Empfängern für Überwachungslichtstrahlung umfasst. Die Frontscheibe ist dabei sphärisch gekrümmt, so dass die Überwachungslichtstrahlung des Senders der Überwachungseinrichtung durch zwei gekrümmte Abschnitte der Frontscheibe hindurch zu dem jeweiligen Empfänger gelangt. Durch die Auswölbung der sphärischen Frontscheibe entsteht ein zusätzlicher Platzbedarf der optischen Erfassungsvorrichtung.

DE 100 25 511 C1 offenbart eine ähnliche Erfassungsvorrichtung mit einem Blickwinkel von 180°, bei der die Lichtsender der Überwachungseinrichtung aus DE 197 35 038 A1 durch einen Spiegel ersetzt sind, der über einen weiteren, an der Ablenkeinheit der Erfassungsvorrichtung angebrachten Spiegel von einer zentralen Sendeeinheit angestrahlt wird. Auch hier ist die Frontscheibe sphärisch nach außen gewölbt, um von der Überwachungslichtstrahlung der Überwachungseinrichtung durchstrahlt zu werden.

EP 1 148 345 B1 und DE 199 02 903 C1 offenbaren jeweils eine optische Erfassungsvorrichtung mit einem Blickwinkel von kleiner als 360°, bei der an der Ablenkeinheit eine Reflexionszone vorgesehen ist, welche dann von der Sendeeinheit bestrahlt wird, wenn die Ablenkeinheit sich in dem blinden Winkelbereich der optischen Erfassungsvorrichtung befindet. Das auf die Reflexionszone einfallende Licht wird auf eine Empfangseinheit gelenkt, um auf diese Weise in dem inaktiven Scanwinkelbereich der optischen Erfassungsvorrichtung die Funktionstüchtigkeit der Sendeeinheit oder die Verschmutzung von optischen Komponenten innerhalb der Vorrichtung überprüfen zu können. Eine Verschmutzungsdetektion einer nach außen abgrenzenden Frontscheibe ist nicht vorgesehen.

EP 1 939 650 A2 offenbart eine optische Erfassungsvorrichtung gemäß dem Oberbegriff des Anspruchs 1.

Aufgabe der Erfindung ist es, eine optische Erfassungsvorrichtung der eingangs genannten Art zu schaffen, die eine weitgehende Miniaturisierung der Erfassungsvorrichtung erlaubt und gleichzeitig eine wirksame und zuverlässige optische Kanaltrennung zwischen einem Sende- und einem Empfangskanal der Erfassungsvorrichtung ermöglicht.

Diese Aufgabe wird durch eine optische Erfassungsvorrichtung mit den Merkmalen des Anspruchs 1 gelöst.

Die Überwachungseinrichtung der erfindungsgemäßen optischen Erfassungsvorrichtung umfasst wenigstens ein passives optisches Element, das sich mit der Ablenkeinheit bewegt und derart ausgestaltet ist, dass von dem wenigstens einen Sender ausgesendete Überwachungslichtstrahlung zumindest in einer Position der Ablenkeinheit über das passive optische Element zu dem wenigstens einen Empfänger und dabei zumindest einmal durch die Frontscheibe hindurch verläuft und dabei Überwachungslichtstrahlung direkt von der Frontscheibe auf das passive optische Element und/oder direkt von dem passiven optischen Element auf die Frontscheibe trifft.

Diese Ausgestaltung erlaubt eine größtmögliche Flexibilität hinsichtlich der geometrischen Anordnung von Sendern und Empfängern der Überwachungseinrichtung sowie der geometrischen Ausgestaltung und Anordnung der Frontscheibe, da die für die Überwachung verwendete Überwachungslichtstrahlung über das wenigstens eine passive optische Element so geleitet wird, dass die Frontscheibe unter einem für die Verschmutzungsüberwachung günstigen Winkel durchstrahlt wird. Das passive optische Element bewirkt weitgehend unabhängig von den baulichen Gegebenheiten einen vorteilhaften Strahlengang der zur Überwachung der Frontscheibe verwendeten Überwachungslichtstrahlung durch die Frontscheibe. Sender und Empfänger für die Überwachungslichtstrahlung müssen nicht mehr so angeordnet werden, dass ihre direkte Verbindung durch die Frontscheibe geht, sondern müssen stattdessen nur in geeigneter Weise auf das passive optische Element ausgerichtet werden. Ein solches passives optisches Element kann dabei problemlos an einer Stelle der Ablenkeinheit angebracht sein, die aufgrund der baulichen Gegebenheiten für die Anordnung eines Senders oder Empfängers der Überwachungseinrichtung nicht geeignet wäre, wodurch praktisch beliebige Ausgestaltungen und Anordnungen der Frontscheibe sowie des wenigstens einen Senders und wenigstens einen Empfängers der Überwachungseinrichtung möglich werden.

Die Frontscheibe muss insbesondere nicht kegelstumpfförmig oder sphärisch ausgestaltet sein, sondern kann auch die Form eines Zylindermantels aufweisen, wodurch eine weitgehende Miniaturisierung der Erfassungsvorrichtung und eine wirksame und zuverlässige Kanaltrennung erleichtert werden.

Damit, dass Überwachungslichtstrahlung "direkt" von der Frontscheibe auf das passive optische Element bzw. von dem passiven optischen Element auf die Frontscheibe trifft, soll im vorliegenden Text zum Ausdruck gebracht werden, dass die Überwachungslichtstrahlung unter freier Lichtausbreitung von dem passiven optischen Element auf die Frontscheibe bzw. von der Frontscheibe auf das passive optische Element fällt. "Freie Lichtausbreitung" bedeutet dabei, dass sich das Licht in der vorherrschenden Atmosphäre ausbreitet, ohne durch Linsen, Spiegel oder andere optische Bauelemente abgelenkt zu werden.

Im vorliegenden Text werden die Begriffe "Licht", "Strahlung" bzw. "Lichtstrahlung" etc. nicht nur für sichtbares Licht, sondern auch für Strahlung anderer Wellenlänge, zum Beispiel Ultraviolett oder Infrarot verwendet. Lichtquelle und Detektor der eigentlichen Erfassungsvorrichtung werden im vorliegenden Text als "Sendeeinheit" bzw. "Empfangseinheit" bezeichnet, Lichtquelle und Detektor der integrierten Überwachungseinrichtung als "Sender" bzw. "Empfänger".

Vorteilhafte Ausführungsformen der Erfindung sind in den Unteransprüchen, der Beschreibung und den Zeichnungen beschrieben.

Bevorzugt umfasst die Frontscheibe einen im Wesentlichen zylindrisch ausgebildeten Abschnitt. Damit lässt sich eine besonders klein bauende optische Erfassungsvorrichtung realisieren. Der Frontscheibenabschnitt kann dabei insbesondere zylindermantelförmig oder zylindermantelsegmentförmig ausgestaltet sein.

Das passive optische Element kann ein refraktives oder reflektives Element umfassen.

Gemäß einer vorteilhaften Ausführungsform umfasst das wenigstens eine passive optische Element einen Retroreflektor oder eine Prismenfolie. Ein solches passives Element ist besonders geeignet, um auf kostengünstige Weise einen vorteilhaften Strahlengang von einem Sender zu einem Empfänger der Überwachungseinrichtung zu realisieren. Prinzipiell kann das passive optische Element aber auch einen Spiegel oder eine diffus streuende Oberfläche umfassen.

Die Erfindung sieht vor, dass die Ablenkeinheit eine optische Kanaltrennungseinrichtung zur Kanaltrennung zwischen einem Sendekanal für die Sendeeinheit und einen Empfangskanal für die Empfangseinheit umfasst. Die Kanaltrennungseinrichtung ist zumindest abschnittsweise röhrenförmig ausgestaltet und kann insbesondere einen ersten röhrenförmigen Abschnitt umfassen, der von der Sendeeinheit entlang des Strahlengangs der Sendestrahlung zu einer Spiegelfläche der Ablenkeinheit führt, sowie einen zweiten röhrenförmigen Abschnitt, der von der Spiegelfläche der Ablenkeinheit entlang des Strahlengangs der Sendestrahlung zu der Frontscheibe führt.

Das mitbewegte passive optische Element ist erfindungsgemäß an der Kanaltrennungseinrichtung angebracht, insbesondere an einer dem Sendekanal abgewandten Außenseite der Kanaltrennungseinrichtung oder in einem Spalt zwischen einer Austrittsöffnung der Kanaltrennungseinrichtung und der Frontscheibe. Diese Stellen eignen sich besonders, um einen vorteilhaften Strahlengang der zur Verschmutzungsüberwachung ausgesendeten Überwachungslichtstrahlung zu erreichen.

Die Überwachungslichtstrahlung kann die Frontscheibe zweimal oder auch mehr als zweimal durchstrahlen. Durch eine mehrfache Durchstrahlung können insbesondere verschiedene Bereiche der Frontscheibe überwacht werden und somit eine besonders wirksame Verschmutzungserkennung gewährleistet werden. Außerdem kann eine mehrfache Durchstrahlung der Frontscheibe die Empfindlichkeit der Verschmutzungssabschätzung erhöhen.

Erfindungsgemäß durchstrahlt die Überwachungslichtstrahlung die Frontscheibe in einem ersten Bereich, in dem von der Sendeeinheit ausgesendete Sendestrahlung auf die Frontscheibe trifft, und in einem zweiten Bereich, indem aus dem Überwachungsbereich zurückgeworfene Sendestrahlung auf die Frontscheibe trifft. Auf diese Weise kann mit derselben Überwachungseinrichtung sowohl ein Bereich der Frontscheibe überwacht werden, der die von der Sendeeinheit ausgesendete Sendestrahlung auf dem Weg in den Erfassungsbereich durchlässt, sowie ein Bereich, der aus dem Überwachungsbereich zurückgeworfene Sendestrahlung auf dem Weg zur Empfangseinheit durchlässt.

Die Verwendung des passiven optischen Elements ermöglicht im Rahmen der Erfindung eine größtmögliche Flexibilität hinsichtlich der Anordnung des wenigstens einen Senders und des wenigstens einen Empfängers der Überwachungseinrichtung. Zum Beispiel können der Sender und der jeweilige Empfänger nebeneinander angeordnet sein. Ebenso können der Sender und der jeweilige Empfänger in einer Höhenrichtung der Frontscheibe zueinander beabstandet angeordnet sein.

Die Überwachungseinrichtung kann mehrere Sender-/ Empfängerkombinationen und insbesondere mehrere Sender-/Empfängerpaare aufweisen. Diese können zueinander in einer Scanrichtung der optischen Erfassungsvorrichtung und/oder in einer Höhenrichtung der Frontscheibe beabstandet sind, um die Frontscheibe möglichst gleichmäßig zu überwachen. Beispielsweise kann je ein Sender-/Empfängerpaar pro 45° Scanwinkel vorgesehen sein, d.h. bei einem Blickwinkel von 360° acht solche Sender-/ Empfängerpaare.

Die optische Erfassungsvorrichtung kann als Scanner, insbesondere als Laserscanner, ausgebildet sein. Die optische Erfassungsvorrichtung kann nach dem Lichtlaufzeitprinzip arbeiten, um in dem Erfassungsbereich befindliche Objekte sowie deren Abstand von der optischen Erfassungsvorrichtung zu detektieren.

Die erfindungsgemäße optische Erfassungsvorrichtung kann einen Blickwinkel von 360° aufweisen. Insbesondere kann eine als Scanner ausgebildete erfindungsgemäße optische Erfassungsvorrichtung einen Scanwinkelbereich von 360° aufweisen. Die erfindungsgemäße Anordnung kann insbesondere problemlos derart aufgebaut sein, dass die Überwachungseinrichtung die eigentliche optische Erfassung zur Objektdetektion auch bei einem 360°-Scanbereich nicht behindert.

Die Ablenkeinheit der optischen Erfassungsvorrichtung kann einen um eine Drehachse rotierenden Spiegel umfassen, insbesondere wobei der Spiegel um etwa 45° gegenüber der Drehachse geneigt ist.

Eine einzelne Spiegelebene des Spiegels dient dabei sowohl zur Lenkung der Sendestrahlung in den Erfassungsbereich als auch der Lenkung der aus dem Erfassungsbereich zurückgeworfenen Strahlung auf die Empfangseinheit. Das passive optische Element kann prinzipiell an jeder geeigneten Stelle der Ablenkeinheit angebracht sein, insbesondere jedoch auf einer Vorderseite der Ablenkeinheit, die der Sendeeinheit und der Empfangseinheit zugewandt ist.

Als Sender der Überwachungseinrichtung kann prinzipiell jeder aktive Sender für Lichtstrahlung verwendet werden, beispielsweise eine LED. Als Empfänger der Überwachungseinrichtung kann jeder Empfänger verwendet werden, der eine empfangene Lichtstrahlung in ein auswertbares Signal umwandelt, beispielsweise eine Fotodiode.

Nachfolgend wird die Erfindung beispielhaft anhand einer vorteilhaften Ausführungsform unter Bezugnahme auf die beigefügten Figuren beschrieben. Es zeigen:
- Fig. 1: eine optische Erfassungsvorrichtung nach dem Stand der Technik in schematischer Querschnittsdarstellung;
- Fig. 2: eine beispielhafte optische Erfassungsvorrichtung in schematischer Querschnittsdarstellung; und
- Fig. 3: eine optische Erfassungsvorrichtung gemäß einer Ausführungsform der Erfindung in schematischer Querschnittsdarstellung.

Fig. 1 zeigt die eingangs beschriebene bekannte optische Erfassungsvorrichtung, bei der ein Sender 24' der Überwachungseinrichtung 20' direkt auf einen Empfänger 26' der Überwachungseinrichtung 20' gerichtet ist. Damit die von dem Sender 24' ausgesendete Überwachungslichtstrahlung 28', deren Hauptstrahlrichtung in Fig. 1 durch einen Pfeil dargestellt ist, auf ihrem Weg zum Empfänger 26' die Frontscheibe 22' durchstrahlt, ist diese relativ zur Hauptstrahlrichtung der Überwachungslichtstrahlung 28' geneigt und hat die Form eines um die Drehachse 15' der Ablenkeinheit 14' symmetrischen Kegelstumpfmantels.

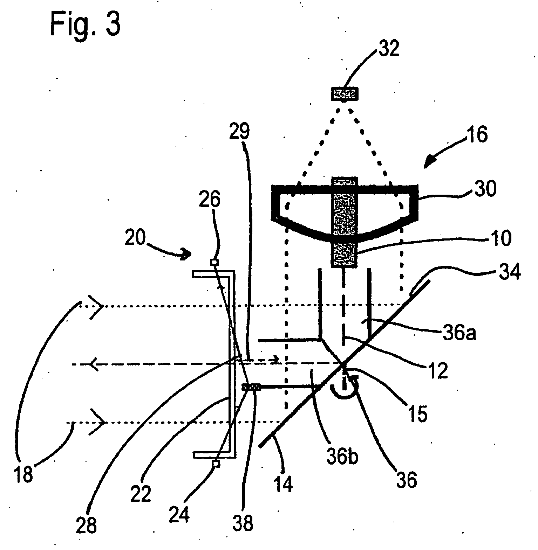

Fig. 2 zeigt eine beispielhafte optische Erfassungsvorrichtung und Fig. 3 zeigt eine Ausführungsform einer erfindungsgemäßen optischen Erfassungsvorrichtung. Soweit die in Fig. 2 und 3 gezeigten optischen Erfassungsvorrichtungen und die in Fig. 1 gezeigte optische Erfassungsvorrichtung einander entsprechende Merkmale aufweisen, sind diese - soweit dargestellt - in Fig. 1 mit gestrichenen Bezugsziffern und in Fig. 2 und 3 mit entsprechenden ungestrichenen Bezugsziffern gekennzeichnet.

Die in Fig. 2 gezeigte optische Erfassungsvorrichtung ist als nach dem Lichtlaufzeitprinzip arbeitender Laserscanner ausgebildet. Sie umfasst eine Sendeeinheit 10 zur Aussendung von Sendestrahlung 12 in einen Erfassungsbereich, eine für die Sendestrahlung 12 durchlässige Frontscheibe 22, eine um eine Drehachse 15 rotierbare Ablenkeinheit 14, die Sendestrahlung 12 in verschiedenen, in einer Scanrichtung aufeinanderfolgenden Richtungen in den Erfassungsbereich lenkt und eine Empfangseinheit 16 zum Empfangen von aus dem Erfassungsbereich zurückgeworfener Sendestrahlung 18.

Die Sendeeinheit 10 ist durch eine im Pulsbetrieb arbeitende Laserlichtquelle gebildet. Die Empfangseinheit 16 umfasst eine Linse 30, die die aus dem Erfassungsbereich zurückgeworfene Sendestrahlung 18 bündelt und auf ein für die zurückgeworfene Sendestrahlung 18 empfindliches elektronisches Detektionselement 32 lenkt.

Die Ablenkeinheit 14 umfasst eine ebene Spiegelfläche 34 und eine optische Kanaltrennungseinrichtung 36 mit einem sich in Richtung der Drehachse 15 erstreckenden ersten röhrenförmigen Abschnitt 36a und einen sich daran unter rechtem Winkel anschließenden zweiten röhrenförmigen Abschnitt 36b. Die beiden röhrenförmigen Abschnitte 36a, b verlaufen entlang des Strahlengangs der Sendestrahlung 12 und schließen diese ein. Genauer verläuft der erste Abschnitt 36a entlang der von der Sendeinheit 10 ausgesendeten Sendestrahlung 12 und der Abschnitt 36b entlang der von der Ablenkeinheit 14 abgelenkten Sendestrahlung 12. Hierdurch wird verhindert, dass Sendestrahlung 12 auf das Detektionselement 32 trifft, bevor sie durch die Frontscheibe 22 in den Erfassungsbereich gelangt ist. Insbesondere wird verhindert, dass von der Frontscheibe 22 reflektierte Sendestrahlung auf das Detektionselement 32 trifft.

Die Frontscheibe 22 ist zylindermantelförmig ausgebildet, wobei der Einfachheit halber in Fig. 2 nur ein linker Querschnittsbereich der Frontscheibe 22 dargestellt ist und der gegenüberliegende Teil der um die Drehachse 15 rotationssymmetrischen Frontscheibe 22 nicht gezeigt ist.

Bei der in Fig. 2 gezeigten zylindrischen Ausgestaltung der Frontscheibe 22 trifft die Sendestrahlung 12 senkrecht auf die Frontscheibe 22, so dass etwaige von der Frontscheibe 22 unerwünschter Weise reflektierte Sendestrahlung, in Fig. 2 durch einen Pfeil 29 gekennzeichnet, senkrecht zur Frontscheibe 22 zurück reflektiert und aufgrund der Frontscheibenkrümmung in einer Transversalrichtung fokussiert wird. Die von der Frontscheibe 22 reflektierte Sendestrahlung 29 läuft somit in die Kanaltrennungseinrichtung 36 zurück und kann somit allenfalls durch einen Spalt zwischen Kanaltrennungseinrichtung 36 und Sendeeinheit 10 hindurch zur Empfangseinheit 16 gelangen, wodurch aber keine wesentliche Beeinträchtigung der Empfangssignale an der Empfangseinheit 16 bewirkt wird. Bei der in Fig. 1 gezeigten optischen Erfassungsvorrichtung des Standes der Technik kann die von der kegelstumpfmantelförmigen Frontscheibe 22' reflektierte Sendestrahlung 29' hingegen in Richtung des Detektionselements 32' reflektiert werden, so dass sich eine unerwünschte Beeinflussung der Empfangssignale an der Empfangseinheit 16' ergeben kann.

Die Überwachungseinrichtung 20 der in Fig. 2 gezeigten optischen Erfassungsvorrichtung umfasst einen Sender 24 und einen Empfänger 26, die nebeneinander angeordnet sind, sowie ein passives optisches Element 38, das an der Ablenkeinheit 14 angebracht ist und sich mit dieser mitbewegt, wobei in der in Fig. 2 dargestellten Position der Ablenkeinheit 14 von dem Sender 24 ausgesendete Überwachungslichtstrahlung 28 über das passive optische Element 38 zu dem Empfänger 26 und dabei zweimal durch die Frontscheibe 22 hindurch verläuft. Die Überwachungslichtstrahlung 28, deren Hauptstrahlrichtung in Fig. 2 durch den mit dem Bezugszeichen 28 bezeichneten Pfeil dargestellt ist, trifft dabei direkt von der Frontscheibe 22 auf das passive optische Element 38 und direkt von dem passiven optischen Element 38 auf die Frontscheibe 22.

Das passive optische Element 38 ist an dem der Frontscheibe 22 zugeordneten röhrenförmigen Abschnitt 36b angeordnet und als Retroreflektor ausgebildet.

Wie in Fig. 2 gezeigt, wird durch die zylindermantelförmige Ausgestaltung der Frontscheibe 22 der von der Erfassungsvorrichtung eingenommene Bauraum wesentlich reduziert. Dennoch wird die Frontscheibe 22 von der Überwachungslichtstrahlung 28 unter einem für die Verunreinigungsabschätzung günstigen Winkel durchstrahlt, so dass eine zuverlässige und genaue Verunreinigungsabschätzung anhand eines Empfangssignals des Empfängers 26 ermöglicht wird. Eine Verunreinigung der Frontscheibe 22 kann zum Beispiel durch Erkennen einer verringerten am Empfänger 26 eintreffenden Strahlungsintensität erkannt werden. In diesem Fall kann ein Warnsignal für einen Benutzer ausgegeben oder eine sonstige Sicherheitsmaßnahme ergriffen werden. Die optische Erfassungsvorrichtung kann eine in Fig. 2 nicht gezeigte Steuereinrichtung umfassen, die zur Auswertung der Empfangssignale des Empfängers 26 und zur entsprechenden Verunreinigungsabschätzung und davon abhängigen Einleitung von Sicherheitsmaßnahmen ausgebildet ist.

Bei der Anordnung von Fig. 2 wird die Frontscheibe 22 zweimal in einem Empfangsbereich der Frontscheibe 22 durchstrahlt, in welchem aus dem Erfassungsbereich zurückgeworfene Sendestrahlung 18 auf die Frontscheibe 22 trifft, die von der Empfangseinheit 16 empfangen wird.

Fig. 3 zeigt eine Ausführungsform einer erfindungsgemäßen optischen Erfassungsvorrichtung, bei der Sender 24 und Empfänger 26 der Überwachungseinrichtung 20 in Richtung der Drehachse 15 beabstandet angeordnet sind und das passive optische Element 38 im Bereich einer Austrittsöffnung des röhrenförmigen Abschnitts 36b angeordnet ist. Das passive optische Element 38 ist dabei als in einem Spalt zwischen der Frontscheibe 22 und dem röhrenförmigen Abschnitt 36b angeordnete Prismenfolie ausgebildet. Eine Hauptstrahlrichtung der von dem Sender 24 ausgesendeten Überwachungslichtstrahlung 28 nimmt dabei den in Fig. 3 durch den mit dem Bezugszeichen 28 versehenen Pfeil gezeigten Verlauf. Wie in Fig. 3 ersichtlich, wird die Frontscheibe 22 sowohl in einem Sendebereich durchstrahlt, in dem von der Sendeeinheit 10 ausgesendete Sendestrahlung 12 auf die Frontscheibe 22 trifft, sowie in einem Empfangsbereich, in dem aus dem Erfassungsbereich zurückgeworfene Sendestrahlung 18 auf die Frontscheibe 22 trifft, die von der Empfangseinheit 16 empfangen wird.

Bei der in Fig. 3 gezeigten Ausgestaltung können Sender 24 und Empfänger 26 auch wie bei der optischen Erfassungsvorrichtung von Fig. 2 nebeneinander angeordnet werden, wenn entweder anstelle des in Fig. 3 eingezeichneten Senders 24 oder anstelle des in Fig. 3 eingezeichneten Empfängers 26 ein reflektives Bauteil, insbesondere ein Retroreflektor, vorgesehen ist.

Die in Fig. 2 und 3 gezeigten optischen Erfassungsvorrichtungen umfassen jeweils eine Kanaltrennungseinrichtung 36, an der das passive optische Element 38 angebracht ist. Eine optische Erfassungsvorrichtung kann aber auch ohne eine solche Kanaltrennungseinrichtung realisiert sein. Unabhängig davon, ob eine Kanaltrennungseinrichtung vorgesehen ist oder nicht, kann das passive optische Element auch an einer geeigneten anderen Stelle der Ablenkeinheit angebracht sein, beispielsweise auf einem Bereich einer Spiegelfläche der Ablenkeinheit oder einer Ausladung der Ablenkeinheit.

Bei der obigen Schilderung der optischen Erfassungsvorrichtungen wurde immer jeweils ein Sender und Empfänger der Überwachungseinrichtung beschrieben. Selbstverständlich können auch mehrere derartige Sender-/Empfängerpaare um die Drehachse angeordnet sein.

### Bezugszeichenliste

- 10, 10': Sendeeinheit
- 12, 12': Sendestrahlung
- 14, 14': Ablenkeinheit
- 15, 15': Drehachse
- 16, 16': Empfangseinheit
- 18, 18': zurückgeworfene Sendestrahlung
- 20, 20': Überwachungseinrichtung
- 22, 22': Frontscheibe
- 24, 24': Sender für Überwachungslichtstrahlung
- 26, 26': Empfänger für Überwachungslichtstrahlung
- 28, 28': Überwachungslichtstrahlung
- 29, 39': von der Frontscheibe reflektierte Sendestrahlung
- 30, 30': Linse
- 32, 32': Detektionselement
- 34, 34': Spiegelfläche
- 36: Kanaltrennungseinrichtung
- 36a, b: röhrenförmiger Abschnitt
- 38: passives optisches Element

## Patentansprüche

1. Optische Erfassungsvorrichtung, insbesondere Laserscanner, mit
- einer Sendeeinheit (10) zur Aussendung von Sendestrahlung (12) in einen Erfassungsbereich,
- einer für die Sendestrahlung (12) durchlässigen Frontscheibe (22),
- einer beweglichen Ablenkeinheit (14), um Sendestrahlung (12) in verschiedenen Richtungen in den Erfassungsbereich zu lenken,
- einer Empfangseinheit (16) zum Empfangen von aus dem Erfassungsbereich zurückgeworfener Sendestrahlung (18) und
- einer Überwachungseinrichtung (20) zur Überwachung eines Verschmutzungsgrads der Frontscheibe (22), die wenigstens einen Sender (24) und wenigstens einen Empfänger (26) für Überwachungslichtstrahlung (28) umfasst,
wobei die Überwachungseinrichtung (20) wenigstens ein passives optisches Element (38) umfasst, das sich mit der Ablenkeinheit (14) bewegt und derart angeordnet ist, dass von dem wenigstens einen Sender (24) ausgesendete Überwachungslichtstrahlung (28) zumindest in einer Position der Ablenkeinheit (14) über das passive optische Element (38) zu dem wenigstens einen Empfänger (26) und dabei zumindest einmal durch die Frontscheibe (22) hindurch verläuft und dabei Überwachungslichtstrahlung (28) direkt von der Frontscheibe (22) auf das passive optische Element (38) und/oder direkt von dem passiven optischen Element (38) auf die Frontscheibe (22) trifft,
**dadurch gekennzeichnet, dass**
- die Ablenkeinheit (14) einen Spiegel mit einer Spiegelebene umfasst, wobei die Spiegelebene sowohl zur Lenkung der Sendestrahlung (12) in den Erfassungsbereich als auch zur Lenkung der aus dem Erfassungsbereich zurückgeworfenen Sendestrahlung (18) auf die Empfangseinheit (16) angeordnet ist,
- die Ablenkeinheit (14) eine zumindest abschnittsweise röhrenförmige Kanaltrennungseinrichtung (36) zur Kanaltrennung zwischen einem Sendekanal für die Sendeeinheit (10) und einem Empfangskanal für die Empfangseinheit (16) umfasst, und
- das wenigstens eine passive optische Element (38) so an der Kanaltrennungseinrichtung (36) angeordnet ist, dass die von dem Sender (24) der Überwachungseinrichtung (20) ausgesendete Überwachungslichtstrahlung (28) die Frontscheibe (22) in einem ersten Bereich, in dem von der Sendeeinheit (10) ausgesendete Sendestrahlung (12) auf die Frontscheibe (22) trifft, sowie in einem zweiten Bereich, in dem aus dem Überwachungsbereich zurückgeworfene Sendestrahlung (18) auf die Frontscheibe (22) trifft, durchstrahlt.

2. Optische Erfassungsvorrichtung nach Anspruch 1,
**dadurch gekennzeichnet, dass**
die Frontscheibe (22) einen im Wesentlichen zylindrisch ausgebildeten Abschnitt umfasst.

3. Optische Erfassungsvorrichtung nach Anspruch 1 oder 2,
**dadurch gekennzeichnet, dass**
das wenigstens eine passive optische Element (38) ein refraktives oder reflektives Element umfasst.

4. Optische Erfassungsvorrichtung nach zumindest einem der vorstehenden Ansprüche,
**dadurch gekennzeichnet, dass**
das wenigstens eine passive optische Element (38) einen Retroreflektor oder eine Prismenfolie umfasst.

5. Optische Erfassungsvorrichtung nach zumindest einem der vorstehenden Ansprüche,
**dadurch gekennzeichnet, dass**
das wenigstens eine passive optische Element (38) an einer dem Sendekanal abgewandten Außenseite der Kanaltrennungseinrichtung (36) oder in einem Spalt zwischen einer Austrittsöffnung der Kanaltrennungseinrichtung (36) und der Frontscheibe (22) angeordnet ist.

6. Optische Erfassungsvorrichtung nach zumindest einem der vorstehenden Ansprüche,
**dadurch gekennzeichnet, dass**
der wenigstens eine Sender (24) und der wenigstens eine Empfänger (26) der Überwachungseinrichtung (20) nebeneinander oder in einer Höhenrichtung der Frontscheibe (22) zueinander beabstandet angeordnet sind.

7. Optische Erfassungsvorrichtung nach zumindest einem der vorstehenden Ansprüche,
**dadurch gekennzeichnet, dass**
mehrere Sender-/Empfängerpaare vorgesehen sind, die zueinander in einer Scan-Richtung der optischen Erfassungsvorrichtung und/oder in einer Höhenrichtung der Frontscheibe (22) beabstandet sind.

8. Optische Erfassungsvorrichtung nach zumindest einem der vorstehenden Ansprüche,
**dadurch gekennzeichnet, dass**
die optische Erfassungsvorrichtung einen Scanwinkelbereich von 360° aufweist.

9. Optische Erfassungsvorrichtung nach zumindest einem der vorstehenden Ansprüche,
**dadurch gekennzeichnet, dass**
der Spiegel um eine Drehachse (15) rotierbar ist, wobei der Spiegel insbesondere um etwa 45° gegenüber der Drehachse (15) geneigt ist.

## Claims

1. An optical detection apparatus, in particular a laser scanner, comprising
- a transmission unit (1) for transmitting transmitted radiation (12) into a detection zone;
- a front screen (22) permeable for the transmitted radiation (12);
- a movable deflection unit (14) to direct transmitted radiation (12) into the detection zone in different directions;
- a reception unit (16) for receiving transmitted radiation (18) reflected back from the detection zone; and
- a monitoring device (20) for monitoring a degree of contamination of the front screen (22) which comprises at least one transmitter (24) and at least one receiver (26) for monitoring light radiation (28),
wherein the monitoring device (20) includes at least one passive optical element (38) which is moved with the deflection unit (14) and which is arranged such that monitoring light radiation (28) transmitted by the at least one transmitter (24) extends at least in one position of the deflection unit (14) via the passive optical element (38) to the at least one receiver (26) and in so doing extends at least once through the front screen (22) and in this respect monitoring light radiation (28) impacts directly from the front screen (22) onto the passive optical element (38) and/or directly from the passive optical element (38) onto the front screen (22), **characterised in that**
- the deflection unit (14) includes a mirror having a mirror plane, wherein the mirror plane is arranged both for directing the transmitted radiation (12) into the detection zone and for directing the transmitted radiation (18) reflected back from the detection zone onto the reception unit (16);
- the deflection unit (14) includes an at least sectionally tubular channel separation device (36) for the channel separation between a transmission channel for the transmission unit (10) and a reception channel for the reception unit (16); and
- the at least one passive optical element (38) is arranged at the channel separation device (36) such that the monitoring light radiation (28) transmitted from the transmitter (24) of the monitoring device (20) radiates through the front screen (22) in a first region in which transmitted radiation (12) transmitted from the transmission unit (10) impacts onto the front screen (22) and in a second region in which transmitted radiation (18) reflected back from the monitored zone impacts onto the front screen (22).

2. An optical detection apparatus in accordance with claim 1,
**characterised in that**
the front screen (22) includes a substantially cylindrically designed section.

3. An optical detection apparatus in accordance with claim 1 or claim 2,
**characterised in that**
the at least one passive optical element (38) includes a refractive or reflective element.

4. An optical detection apparatus in accordance with at least one of the preceding claims,
**characterised in that**
the at least one passive optical element (38) includes a retroreflector or a prism film.

5. An optical detection apparatus in accordance with at least one of the preceding claims,
**characterised in that**
the at least one passive optical element (38) is arranged at an outer side of the channel separation device (36) remote from the transmission channel or is arranged in a gap between an exit aperture of the channel separation device (36) and the front screen (22).

6. An optical detection apparatus in accordance with at least one of the preceding claims,
**characterised in that**
the at least one transmitter (24) and the at least one receiver (26) of the monitoring device (20) are arranged next to one another or spaced apart from one another in a vertical direction of the front screen (22).

7. An optical detection apparatus in accordance with at least one of the preceding claims,
**characterised in that**
a plurality of transmitter/receiver pairs are provided which are spaced apart from one another in a scan direction of the optical detection apparatus and/or in a vertical direction of the front screen (22).

8. An optical detection apparatus in accordance with at least one of the preceding claims,
**characterised in that**
the optical detection apparatus has a scan angle range of 360°.

9. An optical detection apparatus in accordance with at least one of the preceding claims,
**characterised in that**
the mirror is rotatable about an axis of rotation (15), with the mirror in particular being inclined by approximately 45°C with respect to the axis of rotation (15).

## Revendications

1. Dispositif de détection optique, en particulier scanner à laser, comprenant
- une unité émettrice (10) pour émettre un rayonnement émis (12) dans une zone de détection,
- une plaque frontale (22) perméable au rayonnement émis (12),
- une unité de déflexion mobile (14), pour dévier le rayonnement émis (12) dans différentes directions dans la zone de détection,
- une unité réceptrice (16) pour recevoir le rayonnement émis (18) renvoyé depuis la zone de détection, et
- un système de surveillance (20) pour surveiller un degré d'encrassement de la plaque frontale (22), qui comprend au moins un émetteur (24) et au moins un récepteur (26) pour un rayonnement lumineux de surveillance (28),
dans lequel le système de surveillance (20) comprend au moins un élément optique passif (38), qui se déplace avec l'unité de déflexion (14) et qui est agencé de telle façon que le rayonnement lumineux de surveillance émis par ledit au moins un émetteur (24) se propage, au moins dans une position de l'unité de déflexion (14), via l'élément optique passif (38) vers ledit au moins un récepteur (26) et traverse ici au moins une fois la plaque frontale (22), et le rayonnement lumineux de surveillance (28) tombe alors directement de la plaque frontale (22) sur l'élément optique passif (38) et/ou directement de l'élément optique passif (38) sur la plaque frontale (22),
**caractérisé en ce que**
- l'unité de déflexion (14) comprend un miroir avec un plan de miroir, tel que le plan de miroir est agencé aussi bien pour dévier le rayonnement émis (12) vers la zone de détection que pour dévier le rayonnement émis (18) renvoyé depuis la zone de détection vers l'unité réceptrice (16),
- l'unité de déflexion (14) comprend un système de séparation de canaux (36), au moins par tronçons sous forme de tube, pour la séparation des canaux entre un canal d'émission pour l'unité émettrice (10) et un canal de réception pour l'unité réceptrice (16), et
- ledit au moins un élément optique passif (38) est agencé sur le système de séparation de canaux (36) de telle façon que le rayonnement lumineux de surveillance (28) émis par l'émetteur (24) du système de surveillance (20) traverse la plaque frontale (22) dans une première région, dans laquelle le rayonnement émis (12) émis par l'unité émettrice (10) tombe sur la plaque frontale (22), ainsi que dans une seconde région, dans laquelle le rayonnement émis (18) renvoyé depuis la zone de surveillance tombe sur la plaque frontale (22).

2. Dispositif de détection optique selon la revendication 1,
**caractérisé en ce que** la plaque frontale (22) comprend un tronçon réalisé essentiellement sous forme cylindrique.

3. Dispositif de détection optique selon la revendication 1 ou 2,
**caractérisé en ce que** ledit au moins un élément optique passif (38) comprend un élément à réfraction ou un élément à réflexion.

4. Dispositif de détection optique selon l'une au moins des revendications précédentes,
**caractérisé en ce que** ledit au moins un élément optique passif (38) comprend un rétroréflecteur ou un film à prisme.

5. Dispositif de détection optique selon l'une au moins des revendications précédentes,
**caractérisé en ce que** ledit au moins un élément optique passif (38) est agencé sur une face extérieure, détournée du canal d'émission, du système de séparation de canaux (36), ou dans un intervalle entre une ouverture de sortie du système de séparation de canaux (36) et la plaque frontale (22).

6. Dispositif de détection optique selon l'une au moins des revendications précédentes,
**caractérisé en ce que** ledit au moins un émetteur (24) et ledit au moins un récepteur (26) du système de surveillance (20) sont agencés l'un à côté de l'autre ou à distance l'un de l'autre dans une direction en hauteur de la plaque frontale (22).

7. Dispositif de détection optique selon l'une au moins des revendications précédentes,
**caractérisé en ce qu'**il est prévu plusieurs paires émetteur/récepteur, qui sont à distance les unes des autres dans une direction de scannage du dispositif de détection optique et/ou dans une direction en hauteur de la plaque frontale (22).

8. Dispositif de détection optique selon l'une au moins des revendications précédentes,
**caractérisé en ce que** le dispositif de détection optique présente une zone angulaire de scannage de 360°.

9. Dispositif de détection optique selon l'une au moins des revendications précédentes,
**caractérisé en ce que** le miroir est capable de rotation autour d'un axe de rotation (15), et le miroir est incliné par rapport à l'axe de rotation (15), en particulier d'environ 45°.
